# EUROPÄISCHE PATENTSCHRIFT

(11) **EP 3 663 166 B1**
(45) Veröffentlichungstag und Bekanntmachung des Hinweises auf die Patenterteilung: **06.04.2022**
(21) Anmeldenummer: 19202273.9
(22) Anmeldetag: 09.10.2019
(51) Int. Cl.: B62D 15/02, E04H 6/42, E04H 6/12, E04H 6/30, E04H 6/36

(54) **PARKROBOTERSYSTEM FÜR EIN KRAFTFAHRZEUG MIT MEHREREN RÄDERN SOWIE VERFAHREN ZUM BETREIBEN EINES DERARTIGEN PARKROBOTERSYSTEMS**
PARKING ROBOT SYSTEM FOR A MOTOR VEHICLE WITH SEVERAL WHEELS AND METHOD FOR OPERATING SUCH A PARKING ROBOT SYSTEM
SYSTÈME DE ROBOT DE STATIONNEMENT POUR UN VÉHICULE AUTOMOBILE POURVU D'UNE PLURALITÉ DE ROUES AINSI QUE PROCÉDÉ DE FONCTIONNEMENT D'UN TEL SYSTÈME DE ROBOTS DE STATIONNEMENT

(30) Priorität: 06.12.2018 DE 102018221167
(43) Veröffentlichungstag der Anmeldung: 10.06.2020
(73) Patentinhaber: Volkswagen Aktiengesellschaft, 38440 Wolfsburg (DE)
(72) Erfinder: Schütz, Daniel, 38165 Lehre (DE); Form, Thomas, 38102 Braunschweig (DE)

(56) Entgegenhaltungen:
- JP-A- 2007 233 771
- JP-A- 2016 216 936
- US-A1- 2005 240 323

## Beschreibung

Die Erfindung betrifft ein Parkrobotersystem für ein Kraftfahrzeug mit mehreren Rädern sowie ein Verfahren zum Betreiben eines derartigen Parkrobotersystems.

Ein Parkroboter ist üblicherweise dazu ausgelegt, ein Kraftfahrzeug innerhalb einer vorgegebenen Infrastrukturumgebung, beispielsweise einem Parkhaus, zu einer vorgegebenen Parkpositionen zu transportieren. Der Parkroboter fährt dafür beispielsweise mit zumindest einem Teilbereich unter das Kraftfahrzeug, hebt dieses an und fährt daraufhin mit dem angehobenen Kraftfahrzeug zur vorgegebenen Parkposition, an der er das Kraftfahrzeug wieder absetzt. Mittels eines Parkroboters können somit Kraftfahrzeuge, unabhängig davon, ob sie beispielsweise über ein Fahrerassistenzsystem zum zumindest teilautonomen Einparken verfügen oder nicht, vollautonom und somit ohne Zutun eines Fahrers des Kraftfahrzeugs innerhalb der Infrastrukturumgebung bewegt werden.

In der DE 10 2015 203 506 A1 wird eine automobile Transporteinheit zum Positionieren von Stellfahrzeugen beschrieben. Hierbei ist die Transporteinheit derart ausgebildet, dass mit dieser zumindest ein Bereich des Stellfahrzeugs anhebbar ist, wie zum Beispiel eine Radachse des Stellfahrzeugs mit zwei Rädern.

In der DE 10 2014 221 770 A1 wird ein Verfahren zum Betreiben eines Abschlepproboters beschrieben, wobei bei einem Auftreten eines Fehlers während einer autonomen Fahrt eines Fahrzeugs innerhalb eines Parkplatzes der Abschlepproboter beauftragt wird, das Fahrzeug zu einer vorbestimmten Position abzuschleppen.

In der US 2010/0161128 A1 wird ein automatisches Parkkontrollsystem beschrieben, das unter anderem einen beweglichen Parkroboter zum Anheben und Tragen von Fahrzeugen umfasst. Zudem umfasst das System einen Parkanleitserver, der dem Parkroboter Informationen zu einer Fahrtrajektorie zu einer gewünschten Parkposition bereitstellt. Im Bereich des automatischen Parkkontrollsystems sind zudem mehrere Kontrollposten installiert, die die Abfahrt der Fahrtrajektorie des das Fahrzeug tragenden Roboters überwachen.

Die JP 2016 216936 A zeigt ein Parkrobotersystem aus mehreren einzelnen Robotern, die jeweils dazu ausgebildet sind, mittels zwei Radauflagearme ein Rad eines Kraftfahrzeugs anzuheben, zu transportieren und wieder abzusetzen.

JP 2016 216936 A offenbart insbesondere ein Parkrobotersystem für ein Kraftfahrzeug mit mehreren Rädern, wobei das Parkrobotersystem einen Hauptroboter und mehrere Nebenroboter umfasst, wobei die Nebenroboter jeweils ein Paar Radauflagearme aufweisen und jeweils dazu ausgelegt sind, mit eingeklappten Radauflagearmen von außen neben jeweils eines der Räder des Kraftfahrzeugs autonom heranzufahren und das jeweilige Rad durch Ausklappen des jeweiligen Paars der Radauflagearme anzuheben, und der Hauptroboter dazu ausgelegt ist, die Nebenroboter mit dem angehobenen Kraftfahrzeug während einer Fahrt zu einer vorgegebenen Zielposition zu begleiten.

Es ist die Aufgabe der Erfindung, eine Lösung bereitzustellen, mit der ein Parkroboter betrieben werden kann, der sich besonders schnell innerhalb einer Parkumgebung bewegt. Diese Aufgabe wird durch die Gegenstände der unabhängigen Patentansprüche gelöst. Vorteilhafte Ausgestaltungen mit zweckmäßigen und nicht-trivialen Weiterbildungen der Erfindung sind in den unabhängigen Ansprüchen, der folgenden Beschreibung und den Figuren angegeben.

Der Erfindung liegt die Erkenntnis zugrunde, dass mit herkömmlichen einteiligen oder mehrteiligen Parkrobotern, die unterhalb des Kraftfahrzeugs positioniert sind und dessen vier Räder anheben, nur mit kleinen Geschwindigkeiten innerhalb einer Infrastrukturumgebung, wie beispielsweise einem Parkhaus, gefahren werden kann. Zudem weisen insbesondere einteilige herkömmliche Parkroboter die Eigenschaft auf, dass mit diesen häufig keine Rampen oder andere Steigen überwunden werden können. Hintergrund hierfür ist, dass beispielsweise eine bodennahe Platte derartiger Parkroboter beispielsweise an der Rampe aufsetzt, sodass diese nicht überwunden werden kann, da der Parkroboter auf dieser aufsetzt. Ein rampentauglicher Parkroboter wäre beispielsweise dadurch realisierbar, dass der Parkroboter einzelne Roboterteile aufweist, die an den einzelnen Rädern des Kraftfahrzeugs angeordnet werden. Ein schnell durch das Parkhaus fahrender Parkroboter könnte nun beispielsweise realisiert werden, indem ein zusätzlicher Roboter vorgesehen ist, der als Leitroboter die das Kraftfahrzeug tragenden Roboter unterstützt und beispielsweise diesen vorausfahrend das System aus mehreren einzelnen Robotern durch das Parkhaus leitet.

Das erfindungsgemäße Parkrobotersystem für ein Kraftfahrzeug mit mehreren Rädern umfasst einen Hauptroboter und mehrere Nebenroboter. Umfasst das Kraftfahrzeug beispielsweise vier Räder, zwei an einer Vorderachse und zwei an einer Hinterachse des Kraftfahrzeugs, umfasst das Parkrobotersystem zusätzlich zu dem Hauptroboter vier Nebenroboter. Der Hauptroboter stellt hierbei den Leitroboter des Robotersystems dar und die vier Nebenroboter die das Kraftfahrzeug tragenden Roboter. Jeder der Nebenroboter weist jeweils ein Paar Radauflagearme auf und ist jeweils dazu ausgelegt, mit eingeklappten Radauflagearmen von außen neben jeweils eines der Räder des Kraftfahrzeugs autonom heranzufahren. Jeder einzelne Nebenroboter weist somit insgesamt zwei Radauflagearme auf, die jeweils in einer Längsrichtung zumindest so lang sind, wie ein Rad des Kraftfahrzeugs breit ist. Bei eingeklappten Radauflagearmen sind diese parallel zu einer Längsrichtung des Nebenroboters angeordnet, sodass sich der jeweilige Nebenroboter mit eingeklappten Radauflagearmen senkrecht zu einer jeweiligen Radachse des Kraftfahrzeugs neben einem der Räder der jeweiligen Radachse des Kraftfahrzeugs anordnet, wenn er autonom an das Kraftfahrzeug heranfährt. Die entsprechenden Ansteuerbefehle können dem Nebenroboter von dem Hauptroboter übermittelt werden, von einer Infrastruktursteuereinrichtung, beispielsweise eines Parkhauses, in dem das Parkrobotersystem zum Einparken von Kraftfahrzeugen verwendet wird, bereitgestellt werden oder vom Nebenroboter selbst ermittelt werden. Die Nebenroboter sind zudem jeweils dazu ausgelegt, das jeweilige Rad des Kraftfahrzeugs durch Ausklappen des jeweiligen Paars der Radauflagearme anzuheben. Durch ein Ausschwenken der jeweiligen Radauflagearme von der eingeklappten Position zu einer ausgeklappten Position nähern sich die jeweiligen Radauflagearme dem jeweiligen Rad und drücken dieses von beiden Seiten durch Druckaufbau an gegenüberliegenden Seiten der Mantelfläche nach oben. Beim Einklappen der jeweiligen Radauflagearme werden die jeweiligen Räder also letztendlich nach oben in einer Fahrzeughochrichtung gedrückt, sodass sie, wenn die jeweiligen Radauflagearme in einem typischerweise 90 Grad betragenden Winkel zur Außenwand des jeweiligen Nebenroboters stehen, das Kraftfahrzeug vollständig vom Fahrboden angehoben haben. Bei jeweiligen eingeklappten Radauflagearme befinden sich diese somit in einer Gebrauchsstellung der jeweiligen Radauflagearme. Jeder einzelne der Nebenroboter ist somit dazu ausgelegt, jeweils eines der Räder des Kraftfahrzeugs hochzuheben, sodass letztendlich das Kraftfahrzeug von den insgesamt beispielsweise vier Nebenrobotern getragen wird. Dieses Anheben mittels der Nebenroboter kann typischerweise gleichzeitig oder zum Beispiel radachsenweise erfolgen, wobei bei einem radachsenweisen Anheben beispielsweise zunächst mittels zwei an Rädern einer Vorderachse des Kraftfahrzeugs angeordneten Nebenrobotern das Kraftfahrzeug im Bereich der Vorderachse angehoben wird und erst danach mittels zwei an Rädern einer Hinterachse des Kraftfahrzeugs angeordneten Nebenrobotern das Kraftfahrzeug auch im Bereich der Hinterachse angehoben wird.

Der Hauptroboter ist nun dazu ausgelegt, die Nebenroboter mit dem angehobenen Kraftfahrzeug während einer Fahrt zu einer vorgegebenen Zielposition zu begleiten. Bei der vorgegebenen Zielposition handelt es sich beispielsweise um einen vorgegebenen Stellplatz innerhalb des Parkhauses, das als Infrastrukturumgebung das Parkrobotersystem bereitstellt. Der Hauptroboter ist also dazu ausgelegt, die Nebenroboter mit dem angehobenen Kraftfahrzeug an einen bestimmten Ort innerhalb des Parkhauses zu bringen und dabei mit diesen mitzufahren und/oder diese tatsächlich anzuführen. Der Hauptroboter stellt somit den Leitroboter dar, dem die mehreren Nebenroboter, die somit Folgeroboter darstellen, folgen können. Durch die Begleitrolle des Hauptroboters sind die jeweiligen Nebenroboter nur mit einer einfachen technischen Ausstattung zu gestalten und systemwichtige Komponenten wie eine Steuereinrichtung oder eine Sensoreinrichtung lediglich im Hauptroboter vorzusehen. Zudem wird durch das jeweilige Anheben der einzelnen Räder des Kraftfahrzeugs mit jeweils einzelnen Nebenrobotern ermöglicht, dass mit dem Parkrobotersystem Rampen, Steigen und andere Hindernisse überwunden werden können, wie beispielsweise Schlaglöcher oder andere Bodenunebenheiten. Das Parkrobotersystem stellt somit ein rampentaugliches Parkrobotersystem für ein Kraftfahrzeug bereit, mit dem Zielpositionen auf unterschiedlichen Ebenen einer Infrastruktur, zum Beispiel unterschiedliche Parkebenen eines Parkhauses, angefahren werden können. Dadurch, dass mit dem Hauptroboter ein Leitroboter, der beispielsweise auch als Lotsenroboter bezeichnet werden kann, die Nebenroboter mit dem angehobenen Kraftfahrzeug zur vorgegebenen Zielposition begleitet, ist es zudem möglich, dass sich das Parkrobotersystem mit relativ großen Geschwindigkeiten im Vergleich zu herkömmlichen Parkrobotern ohne Leitroboter fortbewegen kann, da beispielsweise mittels einer Umgebungserfassung und Fahrtrajektorienplanung des Hauptroboters ein besonders vorausschauendes Begleiten der Nebenroboter durch den Hauptroboter ermöglicht wird. Aus diesem Grund können die einzelnen Roboter des Parkrobotersystem, das heißt der Hauptroboter und die mehreren Nebenroboter, jeweils mit größeren Geschwindigkeiten beispielsweise innerhalb des Parkhauses fahren, als Roboter herkömmlicher Parkrobotersysteme.

Erfindungsgemäß ist es vorgesehen, dass der Hauptroboter eine Sensoreinrichtung umfasst. Diese Sensoreinrichtung kann beispielsweise eine Kamera, ein Lidar-Gerät, ein Radargerät, ein Ultraschallgerät, einen Laserscanner oder einen Infrarotsensor umfassen. Die Sensoreinrichtung des Hauptroboters ist dazu ausgelegt, eine Umgebung des Hauptroboters zu umfassen. Mit der Sensoreinrichtung können beispielsweise Säulen innerhalb eines Parkhauses oder andere Fahrzeuge, die sich in der Umgebung des von dem Parkrobotersystem getragenen Kraftfahrzeug befinden, erfasst werden. Zudem ist die Sensoreinrichtung dazu ausgelegt, Hindernisse für den Parkroboter und die jeweiligen Nebenroboter mit dem angehobenen Kraftfahrzeug in der erfassten Umgebung zu lokalisieren. Sobald die Sensoreinrichtung beispielsweise die Säule innerhalb des Parkhauses erfasst hat, lokalisiert sie diese zum einen relativ zum Hauptroboter und zum anderen relativ zu den jeweiligen Nebenrobotern mit dem angehobenen Kraftfahrzeug. Hierbei wird beispielsweise von dem Parkhaus vorliegendes Kartenmaterial berücksichtigt. Dem Hauptroboter liegen somit Daten vor, die charakterisieren, welche Objekte und potentiellen Hindernisse sich in der aktuellen Umgebung aller Komponenten des Parkrobotersystems befinden, aufhalten und/oder gegebenenfalls bewegen. Die Sensoreinrichtung ist bevorzugt oben in großer Höhe, das heißt in einem großen Abstand zu einem Fahrboden, auf dem der Hauptroboter sowie die Nebenroboter fahren, angeordnet. Bevorzugt hat der Hauptroboter daher eine turmartige Gestalt und weist eine größere Ausdehnung in Hauptroboterhochrichtung als in Hauptroboterquerrichtung auf. Bevorzugt ist die Höhe des Hauptroboters größer als eine Höhe des Kraftfahrzeugs in Kraftfahrzeughochrichtung, wobei die Sensoreinrichtung in einem oberen Teilbereich des Hauptroboters angeordnet ist. Der Hauptroboter könnte daher beispielsweise von seiner Form her an eine aufrecht stehende Person erinnern, wobei die Sensoreinrichtung in einer einem Kopfbereich der Person entsprechenden Höhe im Hauptroboter angeordnet ist. Der Hauptroboter verfügt also über die nötigen Sensoren, um besonders zuverlässig Informationen über eine aktuelle Umgebung der einzelnen Komponenten des Parkrobotersystems zu erfassen. Durch diese Sensordatenerfassung mittels des Hauptroboters wird es ermöglicht, dass auch Hindernisse in einer größeren Entfernung vom Parkrobotersystem erfasst werden können, als es beispielsweise mit nur bodennahen Robotern beziehungsweise Sensoreinrichtungen, die in Bodennähe angeordnet sind, möglich ist. Dadurch wird es ermöglicht, dass größere Geschwindigkeiten mit dem Parkrobotersystems ermöglicht werden im Vergleich zu herkömmlichen Parkrobotersystemen.

Es ist erfindungsgemäß zudem vorgesehen, dass der Hauptroboter eine Steuereinrichtung umfasst, die dazu ausgelegt ist, eine jeweilige Fahrtrajektorie für die jeweiligen Nebenroboter sowie eine Fahrtrajektorie für den Hauptroboter zur vorgegebenen Zielposition zu bestimmen. Die Bestimmung diese Fahrtrajektorie, das heißt die Bestimmung einer Fahrroute von einer aktuellen Startposition zu der vorgegebenen Zielposition, bei der es sich beispielsweise um einen Stellplatz in einem Parkhaus handelt, wird also von der Steuereinrichtung vorgenommen. Hierbei werden von der Steuereinrichtung Kartendaten berücksichtigt, die der Steuereinrichtung bereitgestellt sind. Diese Kartendaten können beispielsweise innerhalb der Steuereinrichtung gespeichert sein oder aber beispielsweise über eine Kommunikationsverbindung mit einer Infrastruktursteuereinrichtung, beispielsweise einer Parkhaussteuereinrichtung, der Steuereinrichtung bereitgestellt werden. Zudem werden bei der Bestimmung der jeweiligen Fahrtrajektorien die von der Sensoreinrichtung erfasste Umgebung und/oder die zuvor mit der Sensoreinrichtung lokalisierten Hindernisse in der Umgebung berücksichtigt. Nähert sich beispielsweise ein anderes Fahrzeug dem Kraftfahrzeug, das von beispielsweise vier Nebenrobotern getragen und von einem Hauptroboter zu einem Stellplatz innerhalb eines Parkhauses begleitet wird, stellt dieses andere Fahrzeug womöglich ein Hindernis für den Transport des Kraftfahrzeugs mit dem Parkrobotersystem dar. Ist dies der Fall, wird dieses in der Umgebung des Kraftfahrzeugs erfasste und lokalisierte andere Fahrzeug zum Beispiel beim Ermitteln einer Ausweichtrajektorie berücksichtigt, wobei diese korrigierte Fahrtrajektorie, das heißt die Ausweichtrajektorie, daraufhin von den einzelnen Komponenten des Parkrobotersystems, dem Hauptroboter und den vier Nebenrobotern, bei der weiteren Fahrt zu der Zielposition berücksichtigt wird. Hierdurch wird somit ein besonders zuverlässiger Transport des Kraftfahrzeugs mit dem Parkrobotersystem innerhalb der Infrastruktureinrichtung, das heißt dem Parkhaus, ermöglicht.

In einer besonders vorteilhaften Ausführungsform der Erfindung ist es vorgesehen, dass der Hauptroboter eine elektrische Hauptantriebsmaschine, eine Batterie zum Versorgen der elektrischen Hauptantriebsmaschine mit elektrischer Energie sowie zumindest ein Antriebsrad zum Fortbewegen des Hauptroboters umfasst. Der Hauptroboter kann somit mittels dieser genannten Bestandteile autonom von der Steuereinrichtung angesteuert werden und kann sich beispielsweise auf verschiedenen Parkebenen eines Parkhauses autonom bewegen, wobei er mittels der Hauptantriebsmaschine, der Batterie und dem zumindest einen Antriebsrad angetrieben wird. Die Steuereinrichtung ist zudem dazu ausgelegt, den Hauptroboter in Übereinstimmung mit der bestimmten Fahrtrajektorie für den Hauptroboter mittels der elektrischen Hauptantriebsmaschine anzusteuern. Der Hauptroboter verfügt somit über das beschriebene Antriebssystem, mit dem er dazu ausgelegt ist, die Nebenroboter mit dem angehobenen Kraftfahrzeug bei ihrer Fahrt zu der vorgegeben Zielposition begleiten zu können. Ein Antrieb sowie eine Steuerung des Hauptroboters sind hierbei unabhängig von den mehreren Nebenrobotern. Der Hauptroboter kann dadurch beispielsweise den Nebenroboter mit dem angehobenen Kraftfahrzeug vorausfahrend diese zu der vorgegebenen Zielposition leiten. Der Hauptroboter ist somit dazu ausgelegt, sich autonom und unabhängig von den Nebenrobotern innerhalb der Infrastrukturumgebung zu bewegen, wodurch er sich besonders vorteilhaft als Leitroboter des Parkrobotersystems eignet.

Es ist zudem in einer weiteren Ausgestaltungsform der Erfindung vorgesehen, dass der Hauptroboter eine Kommunikationsschnittstelle für eine jeweilige Kommunikationsverbindung mit den jeweiligen Nebenrobotern umfasst und die Steuereinrichtung dazu ausgelegt ist, die jeweilige Fahrtrajektorie für den jeweiligen Nebenroboter über die jeweilige Kommunikationsverbindung mit dem jeweiligen Nebenroboter bereitzustellen. Diese Kommunikationsverbindung kann beispielsweise mittels einer Funkverbindung, wie beispielsweise einer WLAN Kommunikationsverbindung, realisiert werden. Die Steuereinrichtung des Hauptroboters übermittelt über die jeweilige Kommunikationsverbindung jeweilige Ansteuerbefehle, das heißt jeweilige Fahrtrajektorien, an die jeweiligen Nebenroboter. Die jeweiligen Nebenroboter müssen somit nicht jeweils dazu ausgelegt sein, ihre jeweiligen Fahrtrajektorien selbst zu ermitteln. Hierdurch wird ein besonders kostengünstiges Parkrobotersystem möglich, da jegliche Informationen und Bestandteile zur Bestimmung jeweiliger Fahrtrajektorien nur im Hauptroboter nötig sind, jedoch nicht in den mehreren Nebenrobotern.

In einer weiteren Ausgestaltungsform der Erfindung ist es vorgesehen, dass jeder der Nebenroboter jeweils eine elektrische Nebenantriebsmaschine, eine Batterie zum Versorgen der jeweiligen elektrischen Nebenantriebsmaschine mit elektrischer Energie sowie eine Kommunikationsschnittstelle für eine Kommunikationsverbindung mit dem Hauptroboter umfasst. Die jeweiligen Nebenroboter verfügen somit ebenfalls über einen eigenen Antrieb, sodass beispielsweise mittels zumindest eines Antriebsrads des jeweiligen Nebenroboters dieser Nebenroboter fortbewegt werden kann. In einer einfachsten Ausgestaltungsform empfangen die jeweiligen Nebenroboter ihre jeweiligen Fahrtrajektorien vom Hauptroboter, woraufhin die Nebenroboter jeweils gemäß dieser jeweiligen empfangenen Fahrtrajektorie durch die Infrastruktureinrichtung autonom fahren. Zudem können über die Kommunikationsverbindung den jeweiligen Nebenrobotern entsprechende Signale übermittelt werden, aufgrund derer das jeweilige Paar Radauflagearme aus- oder eingeklappt wird. Entsprechende Ansteuerbefehle zum Anheben oder Absetzen des jeweiligen Rads des Kraftfahrzeugs können somit ebenfalls von dem Hauptroboter an die jeweiligen Nebenroboter übermittelt werden. Hierdurch sind Nebenroboter mit einer besonders einfachen Ausstattung möglich, die besonders kostengünstig hergestellt werden können, aber dennoch in Verbindung mit dem Hauptroboter dazu ausgelegt sind, gemeinsam als Parkrobotersystem ein Kraftfahrzeug besonders schnell von der Startposition zur Zielposition zu transportieren.

Der jeweilige Nebenroboter ist hierbei bevorzugt als schmaler Nebenroboter realisiert, dessen Tiefe, das heißt dessen Ausdehnung senkrecht zu einer ausgeklappten Stellung der jeweiligen Rollauflagearme, typischerweise 35 Zentimeter beträgt, das heißt in etwa zwei Längen von einem ausgeklappten Außenspiegel des Kraftfahrzeugs breit ist. Die relativ schmalen Nebenroboter können somit auch bei relativ eng geparkten Kraftfahrzeugen noch zwischen beispielsweise zwei nebeneinander geparkte Kraftfahrzeuge fahren und sich von außen neben jeweils einem der Räder des Kraftfahrzeugs nähern und vor diesem positionieren. Mittels der beschriebenen Nebenroboter ist somit auch ein besonders platzsparendes und enges Abstellen der Kraftfahrzeuge nebeneinander innerhalb der Infrastrukturumgebung möglich.

In einer weiteren Ausgestaltungsform der Erfindung ist es vorgesehen, dass zumindest ein Nebenroboter eine Sensoreinheit und eine Steuereinheit umfasst. Dieser Nebenroboter kann beispielsweise eine Kamera, einen Abstandssensor, einen Laserscanner, eine Infrarotkamera oder ein Radargerät umfassen und somit dazu ausgelegt sein, eine Nebenroboterumgebung zu erfassen und in dieser erfassten Umgebung Hindernisse zu lokalisieren. Die Sensoreinheit ist also dazu ausgelegt, eine Umgebung des zumindest einen Nebenroboters zu erfassen und insbesondere Hindernisse für den zumindest einen Nebenroboter in der erfassten Umgebung zu lokalisieren. Ist dies erfolgt, kann beispielsweise von der Steuereinheit des Nebenroboters eine eigene Fahrtrajektorie für den Nebenroboter bestimmt werden. Bei deren Bestimmung können beispielsweise Kartendaten, die entweder vom Hauptroboter und/oder einer Infrastruktursteuereinrichtung bereitgestellt werden oder in der Steuereinheit des Nebenroboters gespeichert sind, berücksichtigt werden.

In einer einfachen Ausgestaltung ist es nun möglich, dass mittels der Sensoreinheit und der Steuereinheit des Nebenroboters lediglich das Heranfahren des Nebenroboters von außen neben eines der Räder des Kraftfahrzeugs unterstützt wird. Beispielsweise kann mit der Sensoreinheit besonders genau bestimmt werden, wann sich der Nebenroboter in einer optimalen Position seitlich des jeweiligen Rades befindet. Zur Lokalisierung des Rades des Kraftfahrzeugs eignet sich beispielsweise ein Laserscanner als Sensoreinheit des Nebenroboters. Daraufhin wird der Nebenroboter jedoch in Übereinstimmung mit der vom Hauptroboter bereitgestellten Fahrtrajektorie angesteuert.

In einer komplexeren Ausgestaltung kann mittels der Sensoreinheit und der Steuereinheit der Nebenroboter unabhängig vom Hauptroboter und den anderen Nebenrobotern während einer Fahrt angesteuert werden. Ein derartiges Vorgehen eignet sich beispielsweise für Fahrten mit niedrigen Geschwindigkeiten von typischerweise fünf bis sechs Kilometern pro Stunde innerhalb der bekannten und vorgegebenen Infrastrukturumgebung. Allerdings sind die Nebenroboter weniger hoch als der Hauptroboter, sodass das Blickfeld der Sensoreinheit des Nebenroboters im Vergleich zur Sensoreinheit des Hauptroboters eingeschränkt ist. Dennoch kann mittels der Sensoreinheit und der Steuereinheit des Nebenroboters die Zuverlässigkeit des gesamten Parkrobotersystems dahingehend erhöht werden, dass beispielsweise relativ niedrige Hindernisse, die sich beispielsweise im Bereich der Nebenroboter dem Kraftfahrzeug nähern und daher beispielsweise von der Sensoreinrichtung des Hauptroboters nicht erfasst werden können, nun erfasst werden können. Bei einem derartigen Hindernis kann es sich beispielsweise um einen von hinten auf das Kraftfahrzeug zurollenden Ball handeln. Basierend auf den Sensordaten des entsprechenden Nebenroboters kann nun die jeweilige Fahrtrajektorie der einzelnen Komponenten des Parkrobotersystems an dieses Hindernis angepasst werden.

Zudem kann der zumindest eine Nebenroboter beispielsweise eine Leuchte aufweisen, das heißt eine Lichteinrichtung umfassen, sodass dieser von anderen Verkehrsteilnehmern sowie gegebenenfalls von Sensoreinrichtungen der Infrastruktur, wie dem Parkhaus, sowie des Hauptroboters besonders schnell und zuverlässig erkannt werden kann. Als derartige Markierungen des jeweiligen Nebenroboters eignet sich beispielsweise eine blinkende rote Leuchte in einem oberen Bereich des Nebenroboters.

Letztendlich kann jeder der einzelnen Nebenroboter dazu ausgelegt sein, auch unabhängig von dem Hauptroboter das Kraftfahrzeug von der Startposition zur Zielposition zu transportieren. Allerdings ist aufgrund der eingeschränkten Sicht der jeweiligen Sensoreinheit des jeweiligen Nebenroboters ein derartiger Transport des Kraftfahrzeugs nur mit einer kleineren Geschwindigkeit möglich, als es mit Unterstützung des Hauptroboters möglich wäre.

In einer weiteren vorteilhaften Ausgestaltungsform der Erfindung ist es vorgesehen, dass die jeweiligen Radauflagearme der jeweiligen Nebenroboter jeweilige Abgleitrollen aufweisen. Diese Abgleitrollen sind dazu ausgelegt, dass, wenn sie sich von zwei gegenüberliegenden Seiten seitlich der Mantelfläche des jeweiligen Rades nähern, diese an dem jeweiligen Rad des Kraftfahrzeugs abrollen können, sodass letztendlich durch weiteres Einklappen der jeweiligen Radauflagearme das Rad des Kraftfahrzeugs vom Fahrboden angehoben wird. Die jeweiligen Abgleitrollen sind hierbei in einer ausgeklappten Stellung der jeweiligen Radauflagearme in einer Längsrichtung parallel zu einer Radachse des Kraftfahrzeugs angeordnet. In dieser Stellung sind die jeweiligen Radauflagearme somit senkrecht zu einer kreisförmigen Radfläche des jeweiligen Rades des Kraftfahrzeugs angeordnet. Letztendlich ist somit eine Drehachse, um die die jeweiligen Abgleitrollen drehbar sind, bei eingeklappten Radauflagearmen parallel zur jeweiligen Radachse des Kraftfahrzeugs, an der das jeweilige Rad angeordnet ist, angeordnet. Durch Drücken der Radauflagearme bei deren Einklappen gegen das jeweilige Rad des Kraftfahrzeugs kann dieses an den Abgleitrollen abgleiten, wobei letztendlich das Rad, wenn die jeweiligen Radauflagearme ihre Endposition erreicht haben, in der sie parallel zu den Radachsen des Kraftfahrzeugs stehen, vom Fahrzeugboden angehoben ist. Die jeweiligen Abgleitrollen sind also als passive Rollen ausgestaltet, die stets drehbar sind. Durch das beidseitige Drücken mit jeweiligen Radauflagearmen gegen das jeweilige Rad wird erreicht, dass bei dem Anheben sowie gegebenenfalls dem Absetzen des Kraftfahrzeugs das Kraftfahrzeug nicht wegrollt und zudem das Anheben und das Absetzen besonders effizient hinsichtlich erforderlicher Energie zum Anheben beziehungsweise Absetzen des Kraftfahrzeugs ist. Es ist daher auf besonders einfache Weise technisch realisierbar, dass ein jeweiliges Rad des Kraftfahrzeugs mittels eines jeweiligen Nebenroboters des Parkrobotersystems angehoben, gehalten sowie wieder abgesetzt wird.

Erfindungsgemäß ist zudem ein Verfahren zum Betreiben eines Parkrobotersystems vorgesehen. Hierbei wird ein Parkrobotersystem, wie es bereits oben beschrieben wurde, betrieben. Die im Zusammenhang mit dem erfindungsgemäßen Parkrobotersystem vorgestellten und bevorzugten Ausgestaltungen und deren Vorteile gelten daher entsprechend, soweit anwendbar, für ein erfindungsgemäßes Verfahren zum Betreiben eines Parkrobotersystems. Dieses Verfahren umfasst die folgenden Schritte: jeweiliges autonomes Heranfahren der Nebenroboter mit eingeklappten jeweiligen Radauflagearmen von außen neben jeweils eines der Räder des Kraftfahrzeugs, Anheben der jeweiligen Räder des Kraftfahrzeugs durch Ausklappen der jeweiligen Paare der Radauflagearme und Begleiten der Nebenroboter mit dem angehobenen Kraftfahrzeug während einer Fahrt zu einer vorgegebenen Zielposition durch den Hauptroboter. Mit Hilfe des erfindungsgemäßen Verfahrens kann somit besonders vorteilhaft ein von den Nebenrobotern angehobenes Kraftfahrzeug unterstützt von dem Hauptroboter mit hoher Geschwindigkeit zuverlässig von einer Startposition zur vorgegebenen Zielposition transportiert werden, beispielsweise von einer Abgabeposition am Eingang eines Parkhauses zu einem Stellplatz in einem Obergeschoß ebendieses Parkhauses.

Für das erfindungsgemäße Verfahren ist es in einer Ausgestaltungsform vorgesehen, dass der Hauptroboter und die jeweiligen Nebenroboter, die das angehobene Kraftfahrzeug tragen, in Übereinstimmung mit jeweiligen Fahrtrajektorien für den Hauptroboter und die jeweiligen Nebenroboter zu der vorgegebenen Zielposition fahren. Dort setzen die jeweiligen Nebenroboter das Kraftfahrzeug durch Einklappen der jeweiligen Paare der Radauflagearme ab. Daraufhin können beispielsweise mittels entsprechender Ansteuerbefehle des Hauptroboters und/oder einer Infrastruktursteuereinrichtung, beispielsweise eines Parkhauses, die Nebenroboter dazu angewiesen werden, sich von dem Kraftfahrzeug zu entfernen und beispielsweise dem Hauptroboter folgend zu einem weiteren Fahrzeug zu fahren, das ebenfalls mittels des Parkrobotersystems und dem erfindungsgemäßen Verfahren zu einer jeweiligen Zielposition dieses Fahrzeugs innerhalb beispielsweise des Parkhauses gefahren werden soll. Mittels des Verfahrens zum Betreiben des Parkrobotersystems können mit diesem somit besonders effektiv Kraftfahrzeuge und/oder andere Fahrzeuge innerhalb einer Infrastrukturumgebung bewegt und eingeparkt werden. Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Parkrobotersystems beschrieben worden sind. Aus diesem Grund sind die entsprechenden Weiterbildungen des erfindungsgemäßen Verfahrens hier nicht noch einmal beschrieben.

Zu der Erfindung gehört auch die Steuereinrichtung des Hauptroboters sowie gegebenenfalls die Steuereinheit des jeweiligen Nebenroboters. Die Steuereinrichtung und/oder die Steuereinheit weist jeweils eine Prozessoreinrichtung auf, die dazu eingerichtet ist, eine Ausführungsform des erfindungsgemäßen Verfahrens durchzuführen. Die Prozessoreinrichtung kann hierzu zumindest einen Mikroprozessor und zumindest einen Mikrokontroller aufweisen. Des Weiteren kann die Prozessoreinrichtung einen Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Im Folgenden ist ein Ausführungsbeispiel der Erfindung beschrieben. Hierzu zeigt:
- Fig. 1: eine schematische Darstellung eines Parkrobotersystems für ein Kraftfahrzeug, bei dem das Kraftfahrzeug von vier Nebenroboters angehoben wird; und
- Fig. 2: eine schematische Darstellung eines Nebenroboters eines Parkrobotersystems.

Bei dem im Folgenden erläuterten Ausführungsbeispiel handelt es sich um eine bevorzugte Ausführungsform der Erfindung. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

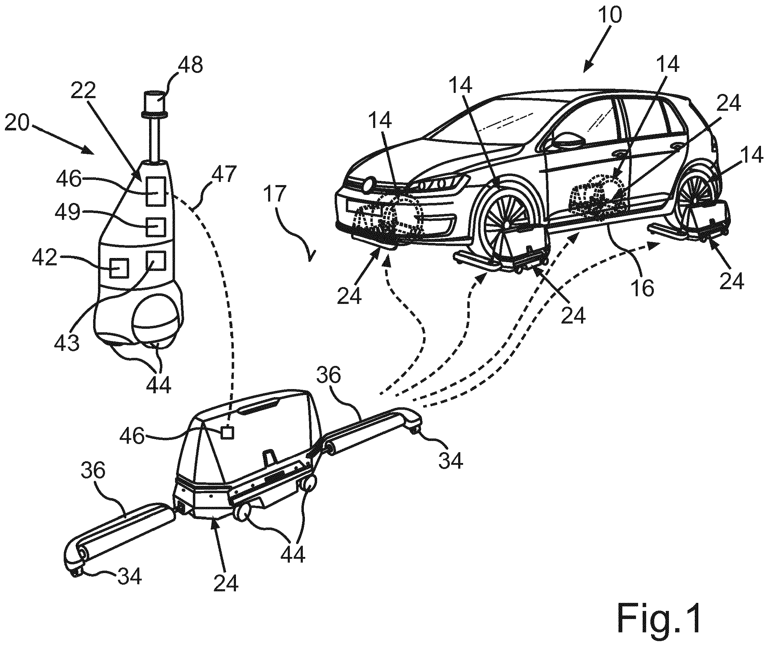

In Fig. 1 ist ein Kraftfahrzeug 10 skizziert, das vier Räder 14 aufweist. Dieses Kraftfahrzeug 10 wurde beispielsweise in einem Eingangsbereich eines Parkhauses abgestellt und soll nun mittels eines Parkrobotersystems 20 zu einer Zielposition innerhalb dieses Parkhauses transportiert werden. Das Parkrobotersystem 20 umfasst einen Hauptroboter 22 sowie vier Nebenroboter 24.

Die Nebenroboter 24 sind jeweils dazu ausgelegt, mit eingeklappten Radauflagearmen 36, von denen sie jeweils ein Paar umfassen, von außen neben jeweils eines der Räder 14 des Kraftfahrzeugs 10 autonom heranzufahren. Hierfür weist jeder einzelne Nebenroboter 24 zwei Antriebsräder 44 auf. Alternativ dazu, kann jeder der Nebenroboter 24 lediglich ein Antriebsrad 44 aufweisen und zusätzlich dazu, beispielsweise aus Stabilitätsgründen, eine weitere Rolle 34 aufweisen. Zudem sind aus Stabilitätsgründen an jeweiligen äußeren Enden der jeweiligen Radauflagearme 36 jeweilige Rollen 34 angeordnet. Die jeweiligen Nebenroboter 24 weisen zudem jeweils eine Kommunikationsschnittstelle 46 auf, mit der sie jeweilige Daten von dem Hauptroboter 22 über eine jeweilige Kommunikationsverbindung 47, beispielsweise eine Funkverbindung, wie zum Beispiel eine WLAN-Verbindung, empfangen können. Die einzelnen Komponenten der jeweiligen Nebenroboter 24 sind in Fig. 1 nur für einen der skizzierten Nebenroboter 24 eingezeichnet. Nachdem sich die jeweiligen Nebenroboter 24 von außen neben jeweils einem der vier Räder 14 des Kraftfahrzeugs 10 positioniert haben, wird das jeweilige Rad 14 durch Ausklappen des jeweiligen Paars der Radauflagearme 36 angehoben. Dieser Schritt ist für die Räder 14 des Kraftfahrzeugs 10 in Fig. 1 bereits passiert. Mittels der vier am Kraftfahrzeug 10 positionierten Nebenroboter 24 kann durch das Anheben des Kraftfahrzeugs 10 ein Abstand zwischen einem Kraftfahrzeugboden 16 des Kraftfahrzeugs 10 und einem Fahrboden 17 vergrößert werden. Zudem ist in Fig. 1 ein fünfter Nebenroboter 24 skizziert, der auf das Kraftfahrzeug 10 autonom zufährt. Dieser fünfte Nebenroboter weist eingeklappte Radauflagearme 36 auf, das heißt die Stellung der Radauflagearme 36, die jeder der Nebenroboter 24 einnimmt, wenn er kein Rad 14 eines Kraftfahrzeugs 10 angehoben hat.

Der Hauptroboter 22 des Parkrobotersystems 20 umfasst eine Sensoreinrichtung 48, eine Steuereinrichtung 49, eine Kommunikationsschnittstelle 46 für jeweilige Kommunikationsverbindungen 47 zu den jeweiligen Nebenrobotern 24, eine Hauptantriebsmaschine 42 sowie eine Batterie 43 zum Versorgen der elektrischen Hauptantriebsmaschine 42 mit elektrischer Energie. Zudem weist der Hauptroboter 22 zumindest ein Antriebsrad 44 auf, sodass der Hauptroboter 22 autonom fortbewegt werden kann. Der Hauptroboter 22 ist dazu ausgelegt, die Nebenroboter 24 mit dem angehobenen Kraftfahrzeug 10 während einer Fahrt innerhalb des Parkhauses zur vorgegebenen Zielposition, das heißt zum vorgegebenen Stellplatz innerhalb des Parkhauses, zu begleiten. Der Hauptroboter 22 des Parkrobotersystems 20 stellt somit einen Leitroboter dar, der die Nebenroboter 24 zu dem vorgegebenen Stellplatz führen oder zumindest mit den Nebenrobotern 24 zu diesem mitfahren kann.

Die Sensoreinrichtung 48 des Hauptroboters 22 ist dazu ausgelegt, eine Umgebung des Hauptroboters 22 zu erfassen sowie Hindernisse für den Hauptroboter 22 und die jeweiligen Nebenroboter 24 mit dem angehobenen Kraftfahrzeug 10 in der erfassten Umgebung zu lokalisieren. Bei der Sensoreinrichtung 48 handelt es sich beispielsweise um eine Kamera, ein Radargerät, ein Ultraschallgerät, einen Laserscanner oder ein Lidar-Gerät.

Die Steuereinrichtung 49 des Hauptroboters 22 ist dazu ausgelegt, eine jeweilige Fahrtrajektorie für die jeweiligen Nebenroboter 24 sowie eine Fahrtrajektorie für den Hauptroboter 22 zur vorgegebenen Zielposition zu bestimmen. Hierbei berücksichtigt die Steuereinrichtung 49 der Steuereinrichtung 49 bereitgestellte Kartendaten, die erfasste Fahrzeugumgebung und/oder die lokalisierten Hindernisse. Die Kartendaten können dem Hauptroboter 22 hierbei beispielsweise von einer Infrastruktursteuereinrichtung, das heißt beispielsweise von einem Parkhausverwaltungsserver, bereitgestellt werden. Alternativ dazu können dieses Kartendaten auch in der Steuereinrichtung 49 des Kraftfahrzeugs 10 hinterlegt sein.

Über die Kommunikationsschnittstelle 46 übermittelt die Steuereinrichtung 49 die jeweilige Fahrtrajektorie für den jeweiligen Nebenroboter 24 an den jeweiligen Nebenroboter 24. Zudem ist die Steuereinrichtung 49 dazu ausgelegt, den Hauptroboter 22 in Übereinstimmung mit der bestimmten Fahrtrajektorie für den Hauptroboter 22 mittels der elektrischen Hauptantriebsmaschine 42 anzusteuern.

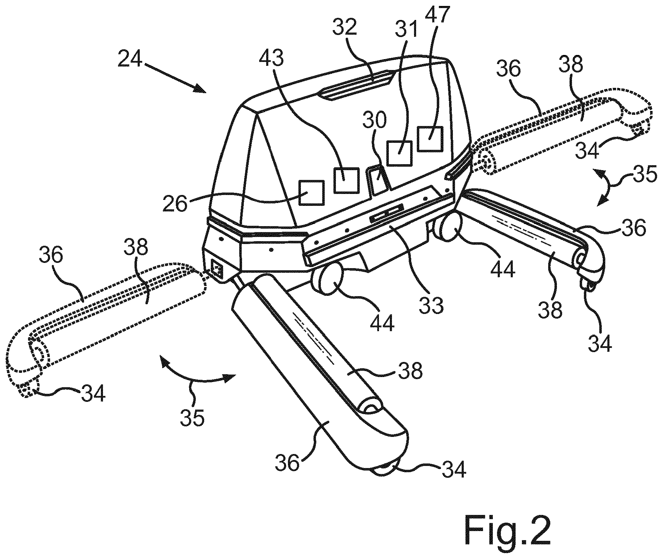

In Fig. 2 ist der Nebenroboter 24 des Parkrobotersystems 20 detailliert skizziert. Der Nebenroboter 24 weist eine elektrische Nebenantriebsmaschine 26, eine Batterie 43 zum Versorgen der elektrischen Nebenantriebsmaschine 26 mit elektrischer Energie, zumindest ein Antriebsrad 44 sowie die Kommunikationsschnittstelle 46 für die Kommunikationsverbindung 47 mit dem Hauptroboter 22 auf. Zusätzlich dazu kann über die Kommunikationsschnittstelle 46 auch eine Kommunikationsverbindung 47 mit der Infrastruktursteuereinrichtung, das heißt dem Parkhausverwaltungsserver, möglich sein. Zudem verfügt der Nebenroboter 24 über eine eigene Sensoreinheit 30 sowie eine eigene Steuereinheit 31. Mittels der Sensoreinheit 30 ist der Nebenroboter 24 dazu ausgelegt, eine Umgebung des Nebenroboters 24 zu erfassen und insbesondere Hindernisse für den Nebenroboter 24 in der erfassten Umgebung zu lokalisieren. Der Nebenroboter 24 kann somit dazu ausgelegt sein, eine eigene Fahrtrajektorie zu ermitteln. In einer einfachen Ausgestaltung kann er zudem lediglich dazu ausgelegt sein, das jeweilige Rad 14 des Kraftfahrzeugs 10 genau positionieren zu können, da er beispielsweise mit seiner Sensoreinheit 30, bei der es sich beispielsweise um ein Ultraschallgerät, einen Laserscanner, eine Kamera oder ein Radargerät handelt, das jeweilige Rad 14 in seiner Umgebung lokalisieren und erfassen kann. Die Sensoreinheit 30 ist zudem dazu ausgelegt, ein Hindernis in der Umgebung des Nebenroboters 24 zu lokalisieren, wie beispielsweise ein auf den Nebenroboter 24 zurollenden Ball, und die entsprechenden Daten an den Hauptroboter 22 zu übermitteln und/oder einen Notstopp des Nebenroboters 24 durchzuführen.

Der Nebenroboter 24 weist zudem eine Leuchte 32 auf. Mittels dieser können andere Verkehrsteilnehmer innerhalb des Parkhauses auf den im Vergleich zum Kraftfahrzeug 10 und dem Hauptroboter 22 niedrig gebauten Nebenroboter 24 aufmerksam gemacht werden. Zudem weist der Nebenroboter 24 einen Bumper 33 auf, der unterstützend zur Abstandsregulierung des Nebenroboters 24 vom Kraftfahrzeug 10 im Rahmen des Anhebens, Transportierens und Absetzens des jeweiligen Rades 14 des Kraftfahrzeugs 10 dient.

Die jeweilige Klapprichtung 35 der Radauflagearme 36 ist ebenfalls in Fig. 2 skizziert. Hierbei ist mit gestrichelten Konturen die Stellung der Radauflagearme 36 relativ zum restlichen Nebenroboter 24 bei eingeklappten Radauflagearmen 36 skizziert. Beim Ausklappen der Radauflagearme 36 werden diese zu der mit durchgezogener Linie skizzierten Position bewegt. Die jeweiligen Radauflagearme 36, von denen der Nebenroboter 24 genau ein Paar umfasst, weisen zudem jeweilige Abgleitrollen 38 auf. Die Drehachse dieser Abgleitrollen 38 ist in der ausgeklappten Stellung parallel zu einer jeweiligen Radachse des Kraftfahrzeugs 10 angeordnet. In eingeklappter Stellung können die Radauflagearme 36 alternativ oder zusätzlich dazu in einer Aussparung einer jeweiligen Verlängerung des Nebenroboters 24 angeordnet sein.

Insgesamt zeigen die Beispiele, wie mit dem Parkrobotersystem 20 mit besonders kleinem Aufwand das Kraftfahrzeug 10 autonom eingeparkt werden kann. Dieses Multirobotersystem als Parkrobotersystem 20 besteht somit aus einem Lotsenroboter, dem Hauptroboter 22, sowie mindestens einem weiteren Nebenroboter 24. Dieser mindestens eine Nebenroboter 24 ist hierbei zur Aufnahme, zum Befördern und zum Abstellen von Fahrzeugen, wie beispielsweise dem Kraftfahrzeug 10, an der Zielposition vorgesehen. Hierbei sind sowohl der Hauptroboter 22, als auch der zumindest eine Nebenroboter 24, jeweils autonom fahrend und zudem rampentauglich ausgestaltet. Mit dem Parkrobotersystem 20 können somit auch Hindernisse überwunden werden sowie gegebenenfalls umfahren werden. Der mindestens eine Nebenroboter 24 kann hierbei in einer Ausgestaltungsform einen flachen Aufbau aufweisen.

Der Hauptroboter 22 ist hierbei nicht am Kraftfahrzeug 10 befindlich und kann sich unabhängig von den anderen Nebenrobotern 24 bewegen. Der Hauptroboter 22 umfasst daher über eine eigene Energieversorgung, das heißt die Batterie 43, die Sensoreinrichtung 48, die Steuereinrichtung 49 sowie die Hauptantriebsmaschine 42 und kann somit als Leitroboter für den zumindest einen Nebenroboter 24 arbeiten. Der mindestens eine Nebenroboter 24 weist ebenfalls eine eigene Energieversorgung, und zwar die Batterie 43, und die Nebenantriebsmaschine 26, auf und verfügt somit über eine eigene Antriebsregelung. Der wenigstens eine Nebenroboter 24 kann über die Kommunikationsschnittstelle 46 vom Hauptroboter 22 Informationen für eine aktuelle und eine zukünftige Fahraufgabe erhalten und diese verarbeiten, das heißt eine jeweilige Fahrtrajektorie empfangen und gemäß dieser angesteuert werden.

### Bezugszeichenliste

- 10: Kraftfahrzeug
- 14: Rad
- 16: Kraftfahrzeugboden
- 17: Fahrboden
- 20: Parkrobotersystem
- 22: Hauptroboter
- 24: Nebenroboter
- 26: Nebenantriebsmaschine
- 30: Sensoreinheit
- 31: Steuereinheit
- 32: Leuchte
- 33: Bumper
- 34: Rolle
- 35: Klapprichtung
- 36: Radauflagearm
- 38: Abgleitrollen
- 42: Hauptantriebsmaschine
- 43: Batterie
- 44: Antriebsrad
- 46: Kommunikationsschnittstelle
- 47: Kommunikationsverbindung
- 48: Sensoreinrichtung
- 49: Steuereinrichtung

## Patentansprüche

1. Parkrobotersystem (20) für ein Kraftfahrzeug (10) mit mehreren Rädern (14), wobei das Parkrobotersystem (20) einen Hauptroboter (22) und mehrere Nebenroboter (24) umfasst, wobei die Nebenroboter (24) jeweils ein Paar Radauflagearme (36) aufweisen und jeweils dazu ausgelegt sind, mit eingeklappten Radauflagearmen (36) von außen neben jeweils eines der Räder (14) des Kraftfahrzeugs (10) autonom heranzufahren und das jeweilige Rad (14) durch Ausklappen des jeweiligen Paars der Radauflagearme (36) anzuheben, und der Hauptroboter (22) dazu ausgelegt ist, die Nebenroboter (24) mit dem angehobenen Kraftfahrzeug (10) während einer Fahrt zu einer vorgegebenen Zielposition zu begleiten, wobei die jeweiligen Nebenroboter (24) nur mit einer einfachen technischen Ausstattung ausgestaltet sind und eine Steuereinrichtung (49) und eine Sensoreinrichtung (48) lediglich im Hauptroboter (22) vorgesehen sind, wobei die Sensoreinrichtung (48) des Hauptroboters (22) dazu ausgelegt ist, eine Umgebung des Hauptroboters (22) zu erfassen sowie Hindernisse für den Hauptroboter (22) und die jeweiligen Nebenroboter (24) mit dem angehobenen Kraftfahrzeug (10) in der erfassten Umgebung zu lokalisieren, und die Steuereinrichtung (49) des Hauptroboters (22) dazu ausgelegt ist, eine jeweilige Fahrtrajektorie für die jeweiligen Nebenroboter (24) sowie eine Fahrtrajektorie für den Hauptroboter (22) zur vorgegebenen Zielposition unter Berücksichtigung von der Steuereinrichtung (49) bereitgestellten Kartendaten, der erfassten Fahrzeugumgebung und/oder den lokalisierten Hindernisse zu bestimmen.

2. Parkrobotersystem (20) nach dem vorhergehenden Anspruch,
**dadurch gekennzeichnet, dass**
der Hauptroboter (22) eine elektrische Hauptantriebsmaschine (42), eine Batterie (43) zum Versorgen der elektrischen Hauptantriebsmaschine (42) mit elektrischer Energie sowie zumindest ein Antriebsrad (44) zum Fortbewegen des Hauptroboters (22) umfasst.

3. Parkrobotersystem (20) nach einem der vorhergehenden Ansprüche,
**dadurch gekennzeichnet, dass**
der Hauptroboter (22) eine Kommunikationsschnittstelle (46) für eine jeweilige Kommunikationsverbindung (47) mit den jeweiligen Nebenrobotern (24) umfasst und die Steuereinrichtung (49) dazu ausgelegt ist, die jeweilige Fahrtrajektorie für den jeweiligen Nebenroboter (24) über die jeweilige Kommunikationsverbindung (47) dem jeweiligen Nebenroboter (24) bereitzustellen.

4. Parkrobotersystem (20) nach einem der vorhergehenden Ansprüche,
**dadurch gekennzeichnet, dass**
jeder der Nebenroboter (24) jeweils eine elektrische Nebenantriebsmaschine (26), eine Batterie (43) zum Versorgen der jeweiligen elektrischen Nebenantriebsmaschine (26) mit elektrischer Energie sowie eine Kommunikationsschnittstelle (46) für eine Kommunikationsverbindung (47) mit dem Hauptroboter (22) umfasst.

5. Parkrobotersystem (20) nach einem der vorhergehenden Ansprüche,
**dadurch gekennzeichnet, dass**
zumindest einer der Nebenroboter (24) eine Sensoreinheit (30) und einer Steuereinheit (31) umfasst und mittels diesen dazu ausgelegt ist, eine Umgebung des zumindest einen Nebenroboters (24) zu erfassen und insbesondere Hindernisse für den zumindest einen Nebenroboter (24) in der erfassten Umgebung zu lokalisieren.

6. Parkrobotersystem (20) nach einem der vorhergehenden Ansprüche,
**dadurch gekennzeichnet, dass**
die jeweiligen Radauflagearme (36) der jeweiligen Nebenroboter (24) jeweilige Abgleitrollen (38) aufweisen, die in einer ausgeklappten Stellung der jeweiligen Radauflagearme (36) in einer Längsrichtung der jeweiligen Abgleitrollen (48) parallel zu einer Radachse des Kraftfahrzeugs (10) angeordnet sind.

7. Verfahren zum Betreiben eines Parkrobotersystems (20) nach einem der vorhergehenden Ansprüche, umfassend die Schritte:
- jeweiliges autonomes Heranfahren der Nebenroboter (24) mit eingeklappten jeweiligen Radauflagearmen (36) von außen neben jeweils eines der Räder (14) des Kraftfahrzeugs (10);
- Anheben der jeweiligen Räder (14) des Kraftfahrzeugs (10) durch Ausklappen der jeweiligen Paare der Radauflagearme (36);
- Begleiten der Nebenroboter (24) mit dem angehobenen Kraftfahrzeug (10) während einer Fahrt zu einer vorgegebenen Zielposition durch den Hauptroboter (22).

8. Verfahren nach Anspruch 7,
**dadurch gekennzeichnet, dass**
der Hauptroboter (22) und die jeweiligen Nebenroboter (24), die das angehobene Kraftfahrzeug (10) tragen, in Übereinstimmung mit jeweiligen Fahrtrajektorien für den Hauptroboter (22) und die jeweiligen Nebenroboter (24) zu der vorgegebenen Zielposition fahren und dort die jeweiligen Nebenroboter (24) das Kraftfahrzeug (10) durch Einklappen der jeweiligen Paare der Radauflagearme (36) absetzen.

## Claims

1. Parking robot system (20) for a motor vehicle (10) with a plurality of wheels (14), wherein the parking robot system (20) comprises a main robot (22) and a plurality of auxiliary robots (24); wherein the auxiliary robots (24) respectively have a pair of wheel support arms (36) and are respectively designed to drive autonomously, with folded-in wheel support arms (36), from outside to next to a respective one of the wheels (14) of the motor vehicle (10), and to lift the respective wheel (14) by unfolding the respective pair of wheel support arms (36), and the main robot (22) is designed to accompany the auxiliary robots (24) with the raised motor vehicle (10) during a travel to a prespecified target position; wherein the respective auxiliary robots (24) are designed only with simple technical equipment, and a control device (49) and a sensor device (48) are provided only in the main robot (22); wherein the sensor device (48) of the main robot (22) is designed to detect an environment of the main robot (22) as well as to localize, in the detected environment, obstacles to the main robot (22) and the respective auxiliary robots (24) with the raised motor vehicle (10), and the control device (49) of the main robot (22) is designed to provide a respective travel trajectory for the respective auxiliary robots (24) as well as a travel trajectory for the main robot (22) to the prespecified target position, taking into account map data provided by the control device (49), the detected vehicle environment, and/or the localized obstacles.

2. Parking robot system (20) according to the preceding claim,
**characterized in that**
the main robot (22) comprises an electric main drive machine (42), a battery (43) for supplying the main electric drive machine (42) with electrical power, and at least one drive wheel (44) for the movement of the main robot (22).

3. Parking robot system (20) according to any one of the preceding claims,
**characterized in that**
the main robot (22) comprises a communication interface (46) for a respective communication link (47) with the respective auxiliary robots (24), and the control device (49) is designed to provide the respective travel trajectory for the respective auxiliary robot (24) via the respective communication link (47) to said respective auxiliary robot (24).

4. Parking robot system (20) according to any one of the preceding claims,
**characterized in that**
each of the auxiliary robots (24) respectively comprises an electric auxiliary drive machine (26), a battery (43) for supplying the respective electric auxiliary drive machine (26) with electrical power, as well as a communication interface (46) for a communication link (47) with the main robot (22).

5. Parking robot system (20) according to any one of the preceding claims,
**characterized in that**
at least one of the auxiliary robots (24) comprises a sensor unit (30) and a control unit (31), and by means of these is designed to detect an environment of the at least one auxiliary robot (24), and in particular to localize obstacles to the at least one auxiliary robot (24) in the detected environment.

6. Parking robot system (20) according to any one of the preceding claims,
**characterized in that**
the respective wheel support arms (36) of the respective auxiliary robot (24) comprise respective slide rollers (38) which, in an unfolded position of the respective wheel support arms (36), are arranged parallel to a wheel axis of the motor vehicle (10) in a longitudinal direction of the respective slide rollers (48).

7. Method for operating a parking robot system (20) according to any one of the preceding claims, comprising the steps of:
- respective autonomous approach of the auxiliary robots (24), with folded-in wheel support arms (36), from outside to next to a respective one of the wheels (14) of the motor vehicle (10);
- raising the respective wheels (14) of the motor vehicle (10) by unfolding the respective pairs of wheel support arms (36);
- accompaniment, by the main robot (22), of the auxiliary robots (24) with the raised motor vehicle (10) during travel to a prespecified target position.

8. Method according to Claim 7,
**characterized in that**
the main robot (22) and the respective auxiliary robots (24), which bear the raised motor vehicle (10), drive to the prespecified target position in accordance with respective travel trajectories for the main robot (22) and the respective auxiliary robots (24), and there the respective auxiliary robots (24) set down the motor vehicle (10) by folding in the respective pairs of wheel support arms (36).

## Revendications

1. Système de robot de stationnement (20) pour un véhicule automobile (10) pourvu d'une pluralité de roues (14), le système de robot de stationnement (20) comprenant un robot principal (22) et une pluralité de robots secondaires (24), les robots secondaires (24) présentant respectivement une paire de bras de support de roue (36) et étant respectivement conçus pour, avec les bras de support de roue (36) repliés, s'approcher de manière autonome de l'extérieur respectivement à côté d'une des roues (14) du véhicule automobile (10) et pour soulever la roue (14) respective en dépliant la paire respective de bras de support de roue (36), et le robot principal (22) étant conçu pour accompagner les robots secondaires (24) avec le véhicule automobile (10) soulevé pendant un déplacement vers une position cible prédéfinie, les robots secondaires (24) respectifs étant équipés uniquement d'un équipement technique simple et un dispositif de commande (49) et un dispositif capteur (48) étant uniquement prévus dans le robot principal (22),le dispositif capteur (48) du robot principal (22) étant conçu pour détecter un environnement du robot principal (22), ainsi que pour localiser dans l'environnement des obstacles pour le robot principal (22) et les robots secondaires (24) respectifs avec le véhicule automobile (10) soulevé, et le dispositif de commande (49) du robot principal (22) étant conçu pour déterminer une trajectoire de déplacement respective pour les robots secondaires (24) respectifs, ainsi qu'une trajectoire de déplacement pour le robot principal (22) vers la position cible, tout en tenant compte des données de carte fournies par le dispositif de commande (49), de l'environnement de véhicule détecté et/ou des obstacles localisés.

2. Système de robot de stationnement (20) selon la revendication précédente,
**caractérisé en ce que**
le robot principal (22) comprend une machine motrice électrique principale (42), une batterie (43) pour l'alimentation de la machine motrice électrique principale (42) en énergie électrique, ainsi qu'au moins une roue motrice (44) pour le déplacement du robot principal (22).

3. Système de robot de stationnement (20) selon l'une quelconque des revendications précédentes,
**caractérisé en ce que**
le robot principal (22) comprend une interface de communication (46) pour une connexion de communication (47) respective avec les robots secondaires (24) respectifs et le dispositif de commande (49) est conçu pour fournir aux robots secondaires (24) respectifs la trajectoire de déplacement pour les robots secondaires (24) respectifs à travers la connexion de communication (47) respective.

4. Système de robot de stationnement (20) selon l'une quelconque des revendications précédentes,
**caractérisé en ce que**
chacun des robots secondaires (24) comprend respectivement une machine motrice électrique secondaire (26), une batterie (43) pour l'alimentation de la machine motrice électrique secondaire (26) respective en énergie électrique, ainsi qu'une interface de communication (46) pour une connexion de communication (47) avec le robot principal (22).

5. Système de robot de stationnement (20) selon l'une quelconque des revendications précédentes,
**caractérisé en ce que**
au moins un des robots secondaires (24) comprend une unité de capteur (30) et une unité de commande (31) et est conçu pour, au moyen de celles-ci, détecter un environnement de l'au moins un robot secondaire (24) et en particulier pour localiser des obstacles pour l'au moins un robot secondaire (24) dans l'environnement détecté.

6. Système de robot de stationnement (20) selon l'une quelconque des revendications précédentes,
**caractérisé en ce que**
les bras de support de roue (36) respectifs des robots secondaires (24) respectifs présentent respectivement des rouleaux de glissement (38), lesquels sont disposés, dans une position dépliée des bras de support de roue (36) respectifs, dans une direction longitudinale des rouleaux de glissement (48) respectifs parallèles à un axe de roue du véhicule automobile (10).

7. Procédé de fonctionnement d'un système de robot de stationnement (20) selon l'une quelconque des revendications précédentes, comprenant les étapes :
- d'approche autonome respective des robots secondaires (24), avec les bras de support de roue (36) repliés, de l'extérieur respectivement à côté d'une des roues (14) du véhicule automobile (10) ;
- de soulèvement des roues (14) respectives du véhicule automobile (10) par dépliement des paires de bras de support de roue (36) respectives ;
- accompagnement par le robot principal (22) des robots secondaires (24) avec le véhicule automobile (10) soulevé pendant un déplacement vers une position cible prédéfinie.

8. Procédé selon la revendication 7,
**caractérisé en ce que**
le robot principal (22) et les robots secondaires (24) respectifs, qui portent le véhicule automobile (10) soulevé, se déplacent, en accord avec les trajectoires de déplacement respectives pour le robot principal (22) et les robots secondaires (24), vers la position cible prédéfinie et là, les robots secondaires (24) respectifs abaissent le véhicule automobile (10) par repliement des paires respectives de bras de support de roue (36).
